Europäisches Patentamt

European Patent Office

Office européen des brevets

(19)

(11)   **EP 0 990 343 B1**

(12)   **EUROPÄISCHE PATENTSCHRIFT**

(45) Veröffentlichungstag und Bekanntmachung des Hinweises auf die Patenterteilung:
**31.07.2002  Patentblatt 2002/31**

(21) Anmeldenummer: **98933535.1**

(22) Anmeldetag: **14.05.1998**

(51) Int Cl.$^7$: **H04N 1/00**

(86) Internationale Anmeldenummer:
**PCT/DE98/01346**

(87) Internationale Veröffentlichungsnummer:
**WO 98/54889 (03.12.1998 Gazette 1998/48)**

(54) **VERFAHREN ZUR DIGITALEN RASTERUNG VON HALBTONBILDERN MIT RASTERN BELIEBIGER RASTERWEITEN UND RASTERWINKEL**

METHOD FOR DIGITALLY SCREENING CONTINUOUS-TONE IMAGES WITH SCREENS OF ANY WIDTH AND ANGLE

PROCEDE DE TRAMAGE NUMERIQUE D'IMAGES A DEMI-TONS AVEC DES TRAMES DE N'IMPORTE QUELS LIGNAGE ET ORIENTATION

(84) Benannte Vertragsstaaten:
**BE CH DE FR GB IT LI NL**

(30) Priorität: **30.05.1997  DE 19722697**

(43) Veröffentlichungstag der Anmeldung:
**05.04.2000  Patentblatt 2000/14**

(73) Patentinhaber: **Heidelberger Druckmaschinen Aktiengesellschaft**
**69115 Heidelberg (DE)**

(72) Erfinder: **KERZ, Ludo**
**D-55291 Saulheim (DE)**

(56) Entgegenhaltungen:
**EP-A- 0 499 738          WO-A-90/06033**
**US-A- 5 315 407**

**Beschreibung**

Technisches Gebiet:

Die Erfindung bezieht sich auf das Gebiet der elektronischen Reproduktionstechnik und betrifft ein Verfahren zur Herstellung von gerasterten Farbauszügen mit Rastern beliebiger Rasterweiten und Rasterwinkel.

Zugrundeliegender Stand der Technik

Bei den meisten Druckverfahren können keine Tonwertabstufungen vorgenommen werden, weil bei diesen Verfahren entweder Farbe auf den Bedruckstoff aufgebracht wird oder nicht. Zur Simulation von Tonwertabstufungen werden daher gitterförmig angeordnete Farbpunkte nebeneinander gedruckt. Durch Variation der Größe der Farbpunkte entsteht optisch ein hellerer oder dunklerer Tonwert. Diese Farbpunkte werden auch als Rasterpunkte bezeichnet, ihr Abstand zueinander als Rasterweite und der Winkel des Rasterpunktgitters zur x-Achse als Rasterwinkel. Für den Vierfarbendruck mit den Druckfarben Cyan, Magenta, Gelb und Schwarz wird zur Minimierung von sogenanntem Moiré üblicherweise mit vier Rastern gleicher Rasterweite und den Rasterwinkelungen 0, 15, 45 und 75 Grad gearbeitet. Bereits minimale Abweichungen hiervon verursachen Moire und damit schlechte oder unbrauchbare Bildreproduktionen.

Die gerasterten Druckvorlagen werden nach dem Stand der Technik mit digital arbeitenden Belichtern erzeugt. Diese benutzen eine Lichtquelle um eine lichtempfindliche Fläche zu belichten. Diese Lichtquelle kann in x- und y-Richtung schrittweise relativ zur Druckvorlage verfahren und gezielt ein- und ausgeschaltet werden. Hierbei ergeben sich kleine Flächenelemente, auch "Device Pixel" genannt, die je nach Steuerung der Lichtquelle einzeln belichtet werden können oder nicht. Rasterpunkte werden bei diesen digitalen Belichtern aus einer Vielzahl von Device Pixeln aufgebaut. In einer vorgeschalteten Rechnereinheit, auch RIP (Raster Image Processor) genannt, wird jedes Device Pixel durch ein Bit in einem Speicher dargestellt. Die Gesamtheit dieser Bits wird als Bitmap bezeichnet und ist ein digitales Abbild der Device Pixel.

In der Vergangenheit sind eine Reihe von Verfahren zur digitalen Rasterung bekannt geworden, die sich in 3 Gruppen einteilen lassen, sogenannte irrationale Rasterverfahren (nachfolgend IS, IS-Verfahren oder IS-Technik genannt), sogenannte rationale Rasterverfahren (nachfolgend RT, RT-Verfahren oder RT-Technik genannt) und frequenzmodulierte Rasterverfahren. Die Namensgebung erklärt sich aus der Tatsache, daß bei den irrationalen Rasterverfahren Rasterwinkel mit einem irrationalen Tangens und bei den rationalen Rasterverfahren Rasterwinkel mit einem rationalen Tangens verwendet werden. Ein irrationales Rasterverfahren ist beispielsweise in der deutschen Patentschrift DE-28 27 596 C2 und rationale Rasterverfahren sind in der deutschen Patentschrift DE - 28 27 596 und in der europäischen Patentschrift, Veröffentlichungsnummer 0 539 397 B1, beschrieben.

Diesen beiden Rasterverfahren ist gemeinsam, daß ein digitales Abbild der Rasterpunkte im Speicher des RIP's existiert, das auch "Schwellwertgebirge" oder Schwellwertmatrix genannt wird. In diesem Zusammenhang wird auch der Begriff "Schwellwertspeicher" verwendet. Dieses Abbild besteht aus einer Gruppe von Zahlenwerten, den sogenannten Schwellwerten. Zur Erzeugung der digitalen Druckvorlagen, auch Rastervorgang oder Rasterung genannt, wird für jedes Bit der Bitmap nach einer vom Rasterverfahren abhängigen Vorschrift ein Schwellwert aus dem Schwellwertgebirge ausgewählt und mit einem, dem Bit der Bitmap zugeordneten digitalen Farbtonsignal, das üblicherweise durch Abtastung einer Vorlage gewonnen wird oder aus einem Speicher ausgelesen wird, verglichen und in Abhängigkeit von diesem Vergleich wird das betreffende Bit gesetzt oder nicht und damit auch das zugehörige Device Pixel des Belichters geschwärzt oder nicht. Der Vorgang der Bestimmung des Schwellwertes, der einem Bit zugeordnet ist, wird auch Schwellwertzugriff genannt.

Bei den IS-Verfahren besteht der Schwellwertspeicher aus dem digitalen Abbild eines einzigen Rasterpunktes, der unter einem Winkel von 0 Grad abgelegt ist. Bei der Rasterung muß für jeden Schwellwertzugriff ein komplexer Rechenvorgang für jedes zu rasternde Bit durchgeführt werden. Hierbei müssen sowohl die Rasterweite als auch der Rasterwinkel, nachfolgend auch nur als Raster bezeichnet, berücksichtigt werden.

Bei den RT-Verfahren besteht der Schwellwertspeicher aus dem digitalen Abbild eines oder mehrerer Rasterpunkte. Bei der Ablage der Schwellwerte im Speicher werden Rasterweite und Rasterwinkel bereits berücksichtigt und die Schwellwerte im Speicher so organisiert, daß die Schwellwerte benachbarter Bits auch im Schwellwertspeicher benachbart sind. Der Rechenvorgang bei einem Schwellwertzugriff reduziert sich damit im wesentlichen zu einer Adressinkrementierung.

Beide Verfahren haben eine völlig andere technische Realisierung was den Verfahrensablauf zur Erzeugung der Raster betrifft. Andererseits haben beide Verfahren verschiedene technische Vor- und Nachteile, weshalb mal das eine und mal das andere Rasterverfahren in der Praxis favorisiert wird. Da bei den IS-Verfahren nur ein einziger Rasterpunkt im Schwellwertspeicher abgelegt wird, besteht ein weitaus geringerer Speicherplatzbedarf. Ferner erlaubt der Rechenvorgang zur Auswahl der Schwellwerte die exakte Realisierung aller Raster, insbesondere auch der für den Farbdruck wichtigen irrationalen Winkel 15 und 75 Grad. Die RT-Verfahren können dagegen die geforderten Rasterwinkel nur mit Werten annähern, die sich durch einen rationalen Tangens beschreiben lassen, wobei der Schwellwertspeicherplatzbedarf etwa quadratisch zur Genauigkeit wächst. Der Vorteil der RT-Verfahren besteht darin, daß der Rastervorgang sich sowohl in Hardware als auch in Software mit geringerem Aufwand und besserer Leistungsfähigkeit realisieren läßt, wobei bei einer Realisierung in Software die IS-Verfahren besonders schlecht abschneiden. Dies gilt insbesondere, wenn große Flächen mit einem einheitlichen Flächendekkungsgrad zu rastern sind. Hier kann für die RT-Verfahren ein dem Flächendeckungsgrad entsprechendes Bitmuster erzeugt werden, das dann nur noch kopiert werden muß. Dagegen ist für das IS-Verfahren prinzipiell für jedes zu rasternde Bit der zugehörige Schwellwertzugriff separat zu berechnen. Fernerhin ist es bei den RT-Verfahren nicht erforderlich Rauschen zuzusetzen. Rauschen wird bei den IS-Verfahren in der Regel zugesetzt um Artifakte, die bei diesem Verfahren entstehen, zu verdecken. Dies führt in der Praxis zu Rasterpunkten mit zerrissenen Kanten, die sich drucktechnisch nachteilig auswirken. Darüber hinaus äußert sich das Rauschen in großen Flächen mit konstanter Flächendeckung in Form einer optischen Unruhe des reproduzierten Bildes.

In der Patentschrift US 5,315,407 wird eine Verbesserung des IS-Verfahrens beschrieben, mit der die Unruhe, die durch die etwas unterschiedliche Form benachbarter Rasterpunkte erzeugt wird, reduziert werden soll. Dazu werden die Koordinaten zur Adressierung der Schwellwertmatrix so modifiziert, daß der Mittelpunkt jedes Rasterpunkts auf das jeweils nächstliegende Devicepixel verschoben wird. Dadurch erhalten die Rasterpunkte eine gleichmäßigere Form. Auch dieses Verfahren weist aber den grundsätzlichen Nachteil des IS-Verfahrens auf, daß für jedes zu rasternde Bit eine komplexe Berechnung der Adressen für den Schwellwertzugriff zu berechnen ist.

Offenbarung der Erfindung

Aufgabe der Erfindung ist es verbesserte Rasterverfahren anzugeben, welche die Nachteile der bekannten Verfahren vermeiden und eine hohe Reproduktionsqualität gewährleisten.

Diese Verfahren sind in den unabhängigen Ansprüchen 1 und 2 angegeben.

Die Erfindung erreicht dies dadurch, daß ein Raster wie es in der europäischen Patentschrift EP 0 539 397 B1 beschrieben ist, durch ein Schwellwertgebirge angenähert wird und daß während des Rastervorganges eine fortlaufende Fehlerberechnung die Abweichung vom geforderten Sollwert beschreibt und bei Überschreitung einer Fehlertoleranzgrenze die Rasterung an einer anderen Stelle des Schwellwertgebirges fortführt wird, so daß hierdurch die aufgelaufene Fehlersumme kompensiert wird.

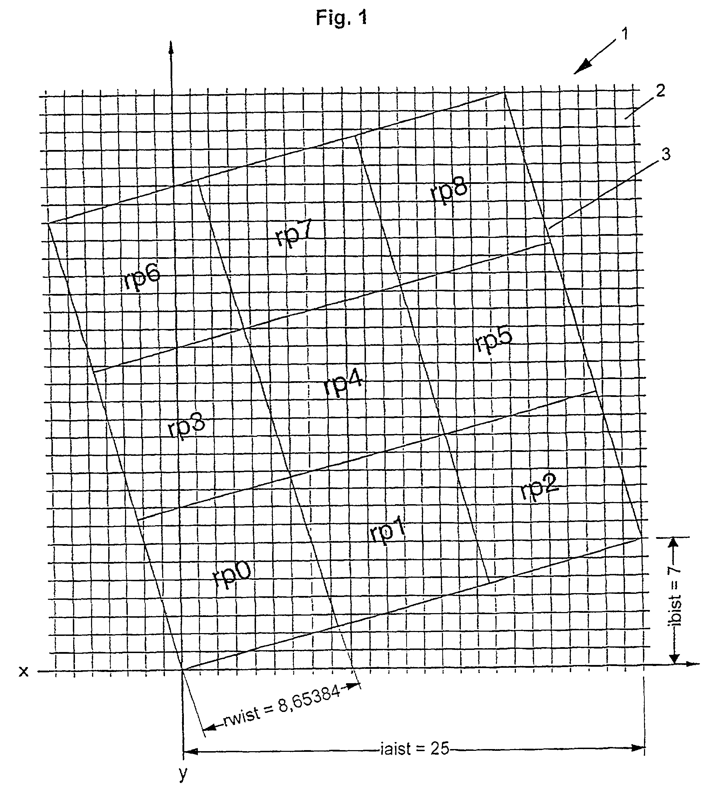

Vorteilhafte Weiterbildungen der Erfindung ergeben sich aus dem nachfolgend anhand der Fig. 1 bis 6 beschriebenen Ausführungsbeispiel.

Das hier beschriebene erfindungsgemäße Verfahren verbindet die Vorteile beider Rasterverfahren in optimaler Weise miteinander. Die Erfindung gestattet es zum einen wie bei der IS-Technik, mit geringem Schwellwertpeicherplatz zu arbeiten und beliebige Raster genau zu reproduzieren, und ermöglicht zum anderen wie bei der RT-Technik eine schnelle und einfache Realisierung in Hardware und insbesondere auch in Software und den Verzicht auf die Überlagerung von Rauschen. Fernerhin kann erfindungsgemäß zum Rastern großer Flächen mit konstantem Farbwert wie bei der RT-Technik ein entsprechendes Bitmuster erzeugt und einfach in die Bitmap kopiert werden. Fernerhin ist es gemäß der Erfindung möglich, die Bitmuster für alle benutzten Farbwertsignale im voraus zu berechnen und im Speicher abzulegen. Dies ist besonders vorteilhaft, da auf Grund des kleineren Schwellwertspeichers deutlich niedrigere Kosten entstehen. Es ist weiterhin gemäß der Erfindung möglich, auch bei sich änderndem Farbwertsignal einfach nur die Bitmuster zu kopieren.

Die Erfindung wird im folgenden anhand der Figuren 1 bis 6 näher erläutert. Es zeigen:

Fig. 1    ein rationales Raster, das einem Ausschnitt aus einer Bitmap von Devicepixeln überlagert ist,

Fig. 2    eine beispielhafte Zuordnung von Schwellwerten zu den Devicepixeln der Bitmap,

Fig. 3    ein zusätzlich überlagertes irrationales Raster, das durch das rationale Raster angenähert werden soll,

Fig. 4    eine einfache Variante zur Ausübung der Erfindung an Hand eines Programmfragmentes,

Fig. 5    eine qualitativ verbesserte Variante zur Ausübung der Erfindung an Hand eines Programmfragmentes und

Fig. 6    eine quantitativ verbesserte Variante von Fig. 5 zur Ausübung der Erfindung an Hand eines Programmfragmentes.

Fig. 1 zeigt einen Ausschnitt aus einer Bitmap (1) von Devicepixeln (2) überlagert mit einem rationalen Raster (3) bestehend aus 3 × 3 Rasterpunkten bzw. Rasterpunktzellen, die mit rp0...rp8 bezeichnet sind. Zusätzlich sind die Koordinatenachsen x und y eines kartesischen Koordinatensystems eingezeichnet. Die Rasterpunktzellen rp0...rp8 werden wie "Kacheln" lückenlos in x- und y-Richtung wiederholt und überdecken damit die gesamte Fläche der Bitmap (1). Die Rassterpunktzellen rp0...rp8 haben eine Rasterweite rwist, und das rationale Raster (3) hat einen Winkel, dessen Tangens durch das Verhältnis der ganzen Zahlen ibist und iaist festgelegt ist, d.h. der Tangens des Rasterwinkels ist eine rationale Zahl.

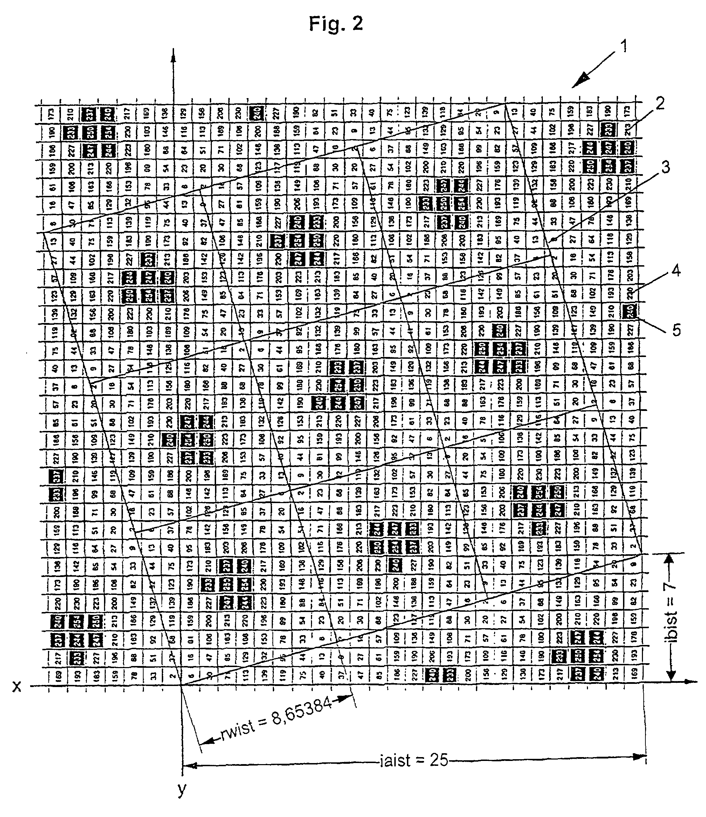

Fig. 2 zeigt zusätzlich eine beispielhafte Zuordnung von Schwellwerten (4) zu jedem Bit der Bitmap (1). Fernerhin ist eine Reihe von Bits in der Zeichnung schwarz markiert (5), um zu verdeutlichen, daß bei der Rasterung mit einem konstanten Farbwertsignal als Ergebnis einige Bits der Bitmap auf "Belichtung" gesetzt werden (schwarz markiert) und andere auf "Nicht-Belichtung" (weiß).

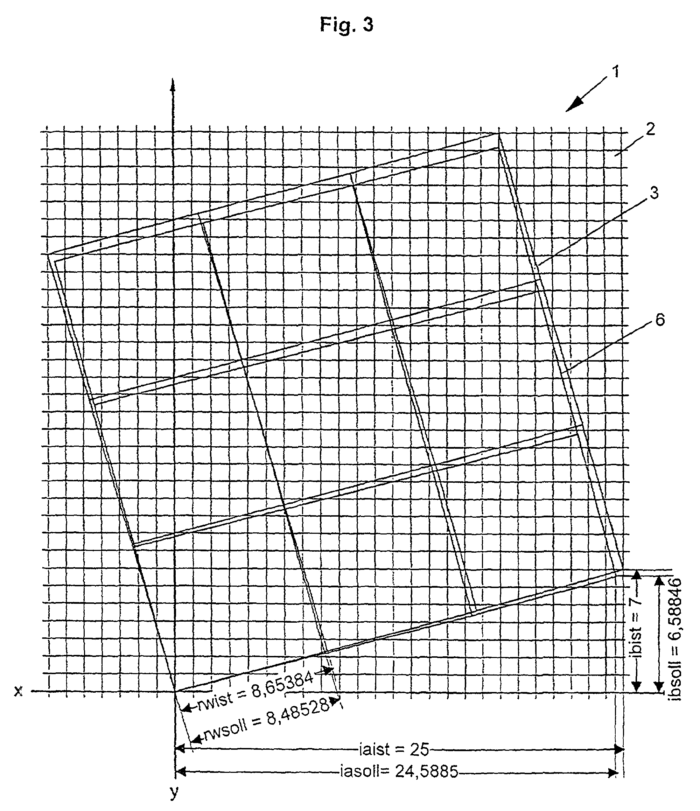

Fig. 3 zeigt zusätzlich zu Fig. 1 ein irrationales Raster (6), das durch das rationale Raster (3) angenähert werden soll. Das irrationale Raster (6) hat eine etwas abweichende Rasterweite rwsoll und auch einen etwas abweichenden irrationalen Rasterwinkel, dessen Tangens durch das Verhältnis der nicht-ganzen Zahlen ibsoll und iasoll festgelegt ist.

Nachfolgend ist die Erfindung anhand eines praktischen Beispieles näher erläutert. Es soll beispielsweise ein irrationales Raster (6), wie in Fig. 3 gezeigt, mit den Parametern

$$rwsoll = 8,485282 \text{ Pixel}$$

$$asoll = 15 \text{ Grad}$$

erzeugt werden. Es wird angenommen, daß dieses Raster, durch ein rationales Raster (3) mit rp X rp Rasterpunkten, wie in Fig. 1, 2 und 3 gezeigt, angenähert wird. In Fig. 1 sind folgende Parameter eingetragen:

$$iaist = 25 \quad ibist = 7 \quad rp = 3$$

Durch Berechnung werden folgende Größen abgeleitet:

$$rwist = sqrt(iaist*iaist+ibist*ibist)/rp = 8,653836 \text{ Pixel}$$

$$aist = atan(ibist/iaist) = 15,642246 \text{ Grad}$$

$$iasoll = rp*rwsoll*cos(asoll) = 24,588461$$

$$ibsoll = rp*rwsoll*sin(asoll) = 6,588457$$

Aus den Größen iaist, ibist, iasoll, ibsoll werden Betrag und Richtung des Fehlers berechnet, der sich nach rwist*rp Pixeln unter dem Winkel aist ergibt:

$$cerr = sqrt(da*da + db*db) = 0,582009$$

$$aerr = atan(db/da) = -135 \text{ Grad}$$

wobei:

$$da = iasoll - iaist$$

$$db = ibsoll - ibist$$

Da der Fehler rotationssymmetrisch zum Koordinatenursprung ist, wird hieraus der Abweichungsfehler bei der Rasterung entlang der x- und y-Achse bestimmt.

$$dxa = cerr * cos(aerr-aist) / (rwist*rp) = -0,019539$$

$$dxb = cerr * sin(aerr-aist) / (rwist*rp) = -0,010991$$

$$dya = cerr * cos(aerr-aist+90) / (rwist*rp) = 0,010991$$

$$dyb = cerr * sin(aerr-aist+90) / (rwist*rp) = -0,019539$$

Die Werte dxa und dxb sind so zu verstehen, daß mit jedem Bit, mit dem man sich in x-Richtung vom Koordinatenursprung entfernt, der Fehler zwischen Soll und Ist in x-Richtung um dxa Bits und in y-Richtung um dxb Bits vergrößert. Die Werte dya und dyb sind so zu verstehen, daß mit jedem Bit, mit dem man sich in y-Richtung vom Koordinatenursprung entfernt, der Fehler zwischen Soll und Ist in x-Richtung um dya Bits und in y-Richtung dyb Bits vergrößert.
Für das Bit an der Position x,y in der Bitmap errechnet sich aus den Größen dxa, dxb, dya und dyb ein Fehler in der Reproduktion des geforderten Rasters zu:

$$erra = y*dya + x*dxa$$

$$errb = y*dyb + x*dxb$$

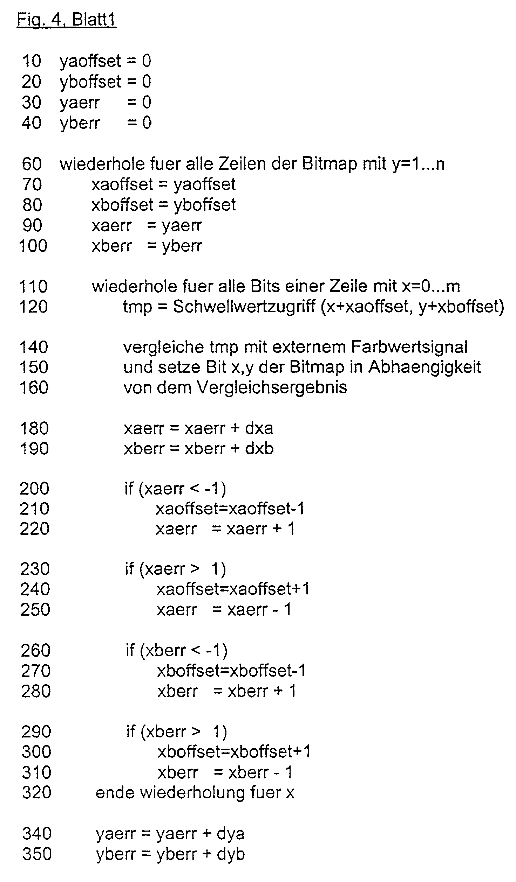

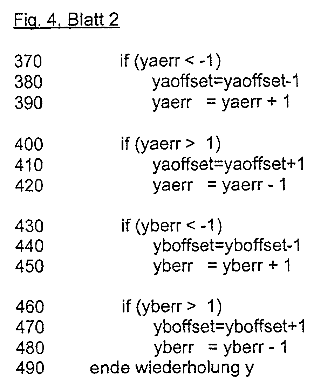

Nachdem so die Größe des Fehlers quantifiziert worden ist, wird nun dieser Fehler korrigiert. Dies wird in einer einfachen Form mit dem Programmfragment in Fig. 4 beschrieben. Normalerweise wird der Rastervorgang zeilenweise ausgeführt, d.h. zunächst werden alle Bits für y=0 und x=0...n, dann für y=1 und x=0... n usw. gerastert. Folglich finden sich in den Zeilen 60... 490 und 110...320 Schleifenkonstruktoren für x und y. In Zeile 120 wird mit den Schleifenzählern x und y und den noch zu erklärenden Zählern xaoffset und xboffset ein Schwellwertzugriff durchgeführt. Der so ermittelte Schwellwert wird in den Zeilen 140...150 mit einem externen Farbwertsignal verglichen und in Abhängigkeit von dessen Ergebnis das Bit x,y der Bitmap gesetzt oder nicht. In den Zeilen 180...190 wird in den Zählern xaerr und xberr der Fehler für jeden x-Schleifendurchlauf auffaddiert. Analoges geschieht in den Zeilen 340...350 für jeden y-Schleifendurchlauf. Wird der in xaerr und xberr aufaddierte Fehler größer als 1 Bit, so wird der Fehler in den Zeilen 200...310 korrigiert. Wenn z.B. xaerr kleiner als -1 wird, so wird von xaoffset 1 subtrahiert. Nehmen wir an, daß xaoffset vorher gleich 0 war, so wird bei allen weiteren x-Schleifendurchläufen bei den Schwellwertzugriffen in Zeile 120 nicht mehr auf den Schwellwert für x sondern auf den für x-1 zugegriffen. Hierdurch wird die eigentliche Korrektur durchgeführt. In weiteren sukzessiven x-Schleifendurchgaengen wird xaoffset zu -2, -3, usw. und bei den Schwellwertzugriffen als Korrektur berücksichtigt. Analoges geschieht in den Zeilen 370...480 für jeden y-Schleifendurchlauf. In den Zeilen 70...100 werden vor jedem x-Schleifendurchlauf deren Zähler mit den bereits in der y-Schleife vorgegebenen Fehler- und Korrekturwerten initialisiert. Analog hierzu werden in den Zeilen 10...40 die gleichen Zähler vor dem ersten y-Schleifendurchgang zu 0 initialisiert.

Diese einfache Methode der Korrektur, bei der ganze Schwellwerte bei der Korrektur übersprungen oder doppelt zugegriffen werden, führt in vielen Fällen zu einem ausreichenden Ergebnis. Um das Verfahren aber weiter zu optimieren, wird erfindungsgemäß folgendermaßen vorgegangen.

In Fig. 1 liegt rp0 mit der linken unteren Ecke exakt auf ganzen Koordinaten der Bitmap. Die linke untere Ecke von rp7 ist dagegen relativ zu ganzen Koordinaten in x-Richtung um -1/rp = -0,333333 verschoben. Die nächstgelegenen ganzen Koordinaten sind x=4, y=19. Analoge Verschiebungen in positiver und negativer x- und y-Richtung sind für rp4, rp5 und rp8 gegeben. Diese in x- und y-Richtung zu ganzen Koordinaten jeweils um plus/minus 1/rp verschobenen Rasterpunkte gestatten es, Fehler bereits dann zu korrigieren, wenn der Fehler größer plus/minus 1/rp wird. Hierzu werden jeweils die nächstgelegenen Koordinaten des entsprechenden Rasterpunktes auf xaoffset und yaoffset aufaddiert.

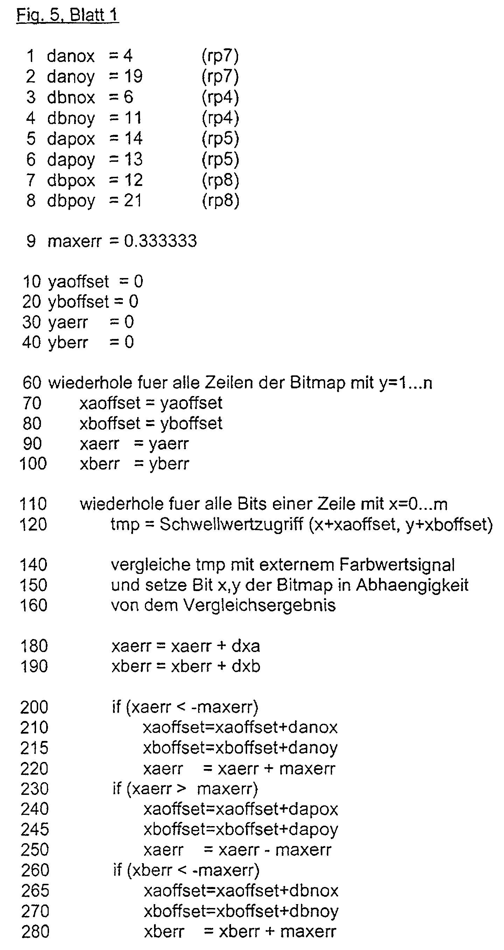

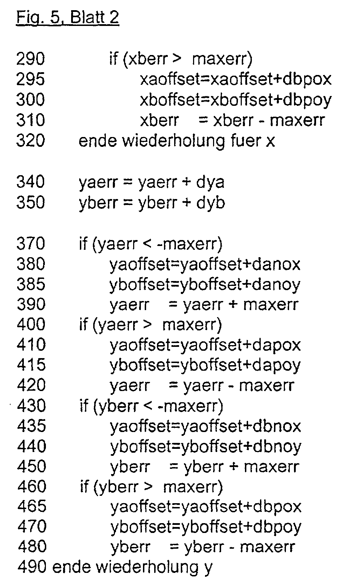

Ein Programmfragment zur Ausübung dieser Verbesserung ist in Fig. 5 beschrieben. Zusätzlich zu den Zeilen in Fig. 4 sind in Fig. 5 einige weitere Zeilen hinzugekommen. Zeile 1...8 beschreiben die nächstgelegenen ganzen Koordinaten Koordinaten von rp4, rp5, rp7 und rp8. In Zeile 9 wird der maximale Fehler mit 1/rp = 0,3333 vorgegeben. In Zeile 200 wird z.B. xaerr nicht mehr auf kleiner -1 sondern auf kleiner -maxerr geprüft. Ist dies der Fall, so werden auf xaoffset und xboffset die Koordinaten von rp7 aufaddiert. Dadurch wird bei allen weiteren Schwellwertzugriffen auf scheinbar um 1/3 verschobene Schwellwerte zugegriffen und damit der Fehler wesentlich feinstufiger korrigiert. Analoges gilt für die Zeilen 230...310 und 370...480.

In Fig. 4 und Fig. 5 werden für jeden x-Schleifendurchlauf die Fehler aufaddiert und die Überschreitung der Fehlergrenzen geprüft. Um das Verfahren weiter zu beschleunigen, kann man erfindungsgemäß im Vorhinein die Anzahl der Bits bestimmen, die ohne Fehlerkorrektur gerastert werden können, diese am Stück rastern und dann die Gesamtfehler aufaddieren und korrigieren.

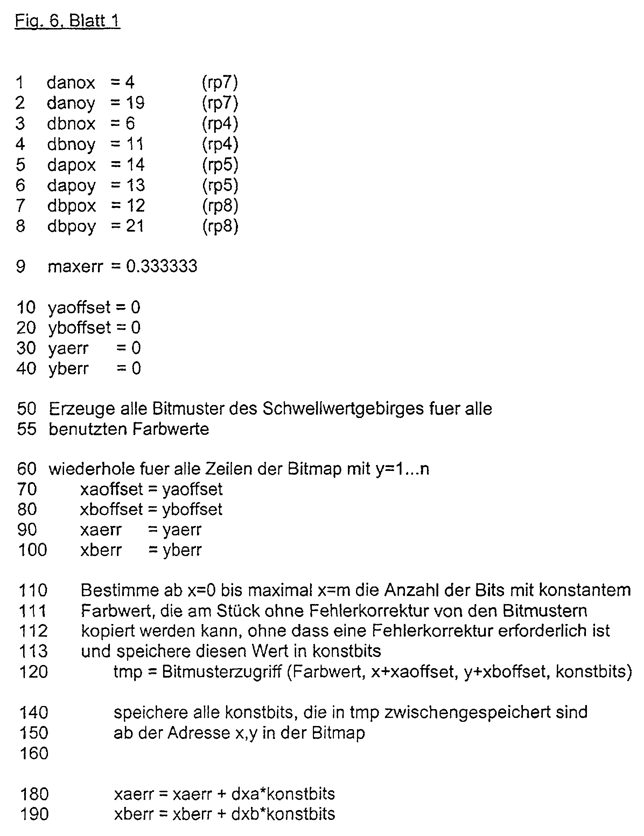

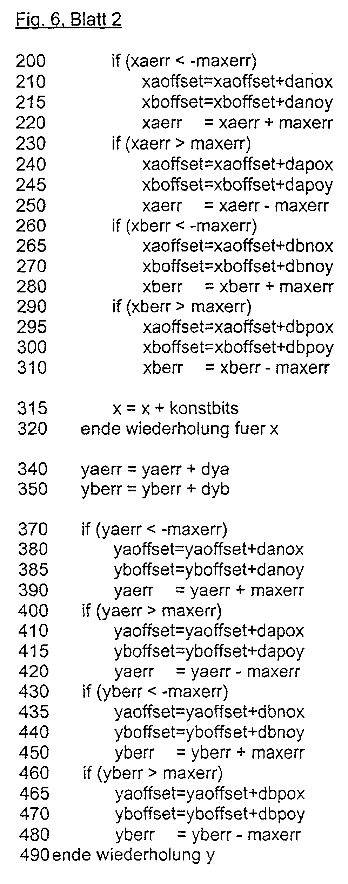

Fernerhin kann erfindungsgemäß noch eine Optimierung stattfinden, indem man, wie in Fig. 6 beschrieben, für alle vorkommenden Farbwerte Bitmuster im voraus berechnet (Zeile 50). Die x-Schleifenbedingung in Zeile 110...113 wird entsprechend komplizierter, da jetzt bestimmt wird, wie viele Bits bei konstantem Farbwert von einem Bitmuster ohne Korrektur kopiert werden können. In Zeile 120 ist anstelle eines Zugriffes auf das Schwellwertgebirge ein Zugriff auf das Bitmuster mit dem geforderten Farbwert vorgenommen worden, wobei konstbits ab der Adresse x+xaoffset, y+xboffset nach tmp kopiert werden. In Zeile 140...150 werden diese dann in die Bitmap kopiert. In den Zeilen 180...190 werden die Fehler für alle konstbits auf einmal aufaddiert. Schließlich wird in Zeile 315 noch konstbits auf den Schleifenzähler x aufaddiert.

## Patentansprüche

1. Verfahren zur digitalen Rasterung eines Halbtonbildes mit einem ersten Raster (6) mit einer beliebigen gewünschten Rasterweite (rwsoll) und einem beliebigen gewünschten Rasterwinkel (asoll) durch Auslesen einer Schwellwertmatrix und Vergleichen der ausgelesenen Schwellwerte mit den Farbwerten des Halbtonbildes, wobei dem ersten Raster (6) ein erstes Koordinatensystem mit x,y-Adressen zugeordnet ist, **dadurch gekennzeichnet, daß**

    a) die Schwellwertmatrix die eines zweiten gegebenen Rasters (3) mit einer gegebenen Rasterweite (rwist) und einem gegebenen Rasterwinkel (aist) ist, dem ein zweites Koordinatensystem mit x,y-Adressen zugeordnet ist,

    b) während des Auslesens der Schwellwerte ein Fehler zwischen den x,y-Adressen des ersten und des zweiten Koordinatensystems ermittelt wird, und

    c) der Fehler durch eine Korrektur der x,y-Adresse des zweiten Koordinatensystems zum Auslesen der Schwellwertmatrix kompensiert wird, sobald der Fehler einen vorgegebenen Grenzwert überschreitet.

2. Verfahren zur digitalen Rasterung eines Halbtonbildes mit einem ersten Raster (6) mit einer beliebigen gewünschten Rasterweite (rwsoll) und einem beliebigen gewünschten Rasterwinkel (asoll) durch Auslesen gespeicherter Bitmuster, die jeweils einem zu reproduzierenden Tonwert des Halbtonbildes zugeordnet sind, und durch Vergleichen der zu reproduzierenden Tonwerte mit einer Schwellwertmatrix gewonnen werden, wobei dem ersten Raster (6) ein erstes Koordinatensystem mit x,y-Adressen zugeordnet ist, **dadurch gekennzeichnet, daß**

a) die Bitmuster einen oder mehrere Rasterpunkte eines zweiten gegebenen Rasters (3) mit einer gegebenen Rasterweite (rwist) und einem gegebenen Rasterwinkel (aist) repräsentieren, dem ein zweites Koordinatensystem mit x,y-Adressen zugeordnet ist,

b) für jeden Farbwert des Halbtonbildes das zugeordnete Bitmuster ausgewählt und ausgelesen wird,

c) während des Auslesens des Bitmusters ein Fehler zwischen den x,y-Adressen des ersten und des zweiten Koordinatensystems ermittelt wird, und

d) der Fehler durch eine Korrektur der x,y-Adresse des zweiten Koordinatensystems zum Auslesen des Bitmusters kompensiert wird, sobald der Fehler einen vorgegebenen Grenzwert überschreitet.

3. Verfahren nach Anspruch 1 oder 2, **dadurch gekennzeichnet, daß** der Fehler fortlaufend für jede Ausleseadresse ermittelt wird und kompensiert wird, sobald der Grenzwert überschritten wird.

4. Verfahren nach Anspruch 1 oder 2, **dadurch gekennzeichnet, daß** im voraus berechnet wird, nach wievielen Ausleseadressen der Fehler den Grenzwert überschreitet, die so ermittelte Anzahl von Ausleseadressen gespeichert wird, und der Fehler nach dem Abarbeiten dieser Anzahl von Ausleseadressen kompensiert wird.

5. Verfahren nach Anspruch 3 oder 4, **dadurch gekennzeichnet, daß** die Ausleseadresse und der Grenzwert jeweils aus einer x- und y-Komponente bestehen, daß der Fehler in eine x-und y-Komponente zerlegt wird und die Korrektur der Ausleseadresse durch Addieren bzw. Subtrahieren von Korrekturwerten auf die x- und y-Komponenten der Ausleseadresse erfolgt, sobald die x- bzw. y-Komponente des Grenzwerts überschritten wird.

6. Verfahren nach Anspruch 5, **dadurch gekennzeichnet, daß** die x- und y-Komponenten des Grenzwertes und des Korrekturwertes jeweils einem Adreßschritt entsprechen.

7. Verfahren nach einem der Ansprüche 1 bis 5, **dadurch gekennzeichnet, daß**

a) eine Schwellwertmatrix bzw. ein Bitmuster verwendet werden, die n x m Rasterpunktzellen repräsentieren,

b) die x- und y-Komponenten des Grenzwertes jeweils einem Bruchteil eines Adreßschritts entsprechen,

c) solche Eckpunkte von den n x m Rasterpunktzellen ausgewählt werden, die relativ zu ganzen Adreßschritten in x- und/oder y-Richtung um einen Bruchteil eines Adreßschritts verschoben sind, und

d) die diesen Eckpunkten am nächsten liegenden ganzzahligen Adreßkomponenten als Korrekturwerte verwendet werden.

8. Verfahren nach Anspruch 7, **dadurch gekennzeichnet, daß** von den ausgewählten Eckpunkten eine Koordinate auf einem ganzen Adreßschritt liegt und die andere Koordinate um einen Bruchteil eines Adreßschritts verschoben ist.

9. Verfahren nach Anspruch 8, **dadurch gekennzeichnet, daß** von den ausgewählten Eckpunkten eine Koordinate auf einem ganzen Adreßschritt liegt und die andere Koordinate um den kleinstmöglichen Bruchteil eines Adreßschritts verschoben ist.

**Claims**

1. Method for digital screening of a halftone image with a first screen (6) with any desired screen width (rwsoll) and any desired screen angle (asoll) by read-out of a threshold-value matrix and comparison of the threshold values read out with the chromaticity values of the halftone image, wherein a first system of coordinates with x,y addresses is assigned to the first screen (6), **characterized in that**

a) the threshold-value matrix is that of a second given screen (3) with a given screen width (rwist) and a given screen angle (aist) to which a second system of coordinates with x,y addresses is assigned,

b) an error between the x,y addresses of the first and second systems of coordinates is detected during read-out of the threshold values, and

c) the error is compensated by a correction of the x,y address of the second system of coordinates for read-out of the threshold-value matrix, once the error exceeds a specified limit.

2. Method for digital screening of a halftone image with a first screen (6) with any desired screen width (rwsoll) and any desired screen angle (asoll) by read-out of stored bit patterns each assigned to a halftone image tonal value to be reproduced and obtained by comparison of the tonal values to be reproduced with a threshold-value matrix, wherein a first system of coordinates with x,y addresses is assigned to the first screen (6), **characterized in that**

a) the bit patterns represent one or more screen dots of a second given screen (3) with a given screen width (rwist) and a given screen angle (aist) to which a second system of coordinates with x,y addresses is assigned,

b) for each chromaticity value of the halftone image, the assigned bit pattern is selected and read out,

c) an error between the x,y addresses of the first and second systems of coordinates is detected during read-out of the bit pattern, and

d) the error is compensated by a correction of the x,y address of the second system of coordinates for read-out of the bit pattern, once the error exceeds a specified limit.

3. Method according to Claim 1 or 2, **characterized in that** the error is detected and compensated continuously for each read-out address once the limit is exceeded.

4. Method according to Claim 1 or 2, **characterized in that** the number of read-out addresses beyond which the error exceeds the limit is calculated in advance, the number of read-out addresses so obtained is stored, and the error is compensated after this number of read-out addresses has been processed.

5. Method according to Claim 3 or 4, **characterized in that** the read-out address and the limit value each consist of an x-component and a y-component, **in that** the error is broken down into an x-component and a y-component and the correction of the read-out address is made by adding or subtracting correction values to [or from] the x- and y-components of the read-out address once the x- or y-component of the limit value is exceeded.

6. Method according to Claim 5, **characterized in that** the x- and y-components of the limit value and of the correction value each correspond to one address step.

7. Method according to any one of Claims 1 to 5, **characterized in that**

a) a threshold-value matrix or bit pattern representing n x m screen-dot cells used,

b) the x- and y-components of the limit value each correspond to a fraction of an address step,

c) the vertices of the n x m screen-dot cells which are shifted by a fraction of an address step in the x- and/or y-axis relative to whole address steps are selected, and

d) the whole-number address-components lying nearest to these vertices are used as correction values.

8. Method according to Claim 7, **characterized in that** one coordinate of the selected vertices lies on a whole address step and the other coordinate is shifted by a fraction of an address step.

9. Method according to Claim 8, **characterized in that** one coordinate of the selected vertices lies on a whole address step and the other coordinate is shifted by the smallest possible fraction of an address step.

## Revendications

1. Procédé de tramage numérique d'une image en demi-ton à l'aide d'une première trame (6) ayant une largeur de maille choisie de manière quelconque (rw$_{cons}$), et un angle de trame (a$_{cons}$) choisi de manière quelconque, par lecture d'une matrice à valeur de seuils, et comparaison des valeurs de seuils lues aux valeurs de teinte de l'image en demi-teinte, selon lequel on associe à la première trame (6), un premier système de coordonnées d'adresses (x,y), **caractérisé en ce que**

a) la matrice à valeur de seuils est celle d'une seconde trame donnée (3), ayant une largeur de trame donnée (rw$_{réel}$) et un angle de trame donné (a$_{réel}$) auquel est associé un second système de coordonnées d'adresses (x,y),
b) pendant la lecture des valeurs de seuils, on détermine une erreur entre les adresses (x,y) du premier et du second système de coordonnées et
c) on compense l'erreur par la correction de l'adresse (x,y) du second système de coordonnées pour lire la matrice de valeur de seuils, dès que l'erreur dépasse une valeur limite donnée.

2. Procédé de tramage numérique d'une image en demi-teinte comportant une première trame (6) ayant une largeur de trame (rw$_{cons}$) choisie de manière quelconque et un angle de trame (a$_{cons}$) choisi de manière quelconque, par la lecture de modèles de bits mémorisés, associés chaque fois à l'une des valeurs de teinte à reproduire de l'image en demi-teinte et que l'on obtient par comparaison des valeurs en demi-teinte à reproduire avec une matrice à valeurs de seuils, un premier système de coordonnées d'adresses (x,y) étant associé à la première trame (6),
**caractérisé en ce que**

a) les modèles de bits représentent un ou plusieurs points de trame d'une seconde trame donnée (3) avec une largeur de trame donnée (rw$_{réel}$) et un angle de trame donné (a$_{réel}$), auquel est associé un second système de coordonnées d'adresses (x,y),
b) pour chaque valeur de couleurs de l'image en demi-teinte, on sélectionne et on extrait le modèle de bits associés,
c) pendant la lecture du modèle de bits, on détermine une erreur entre les adresses (x,y) du premier et celles du second système de coordonnées et
d) on compense l'erreur par une correction de l'adresse (x,y) du second système de coordonnées pour lire le modèle de bits, dès que l'erreur dépasse une valeur limite prédéterminée.

3. Procédé selon les revendications 1 ou 2,
**caractérisé en ce qu'**
on détermine en permanence l'erreur pour chaque adresse de lecture et on compense dès que l'on dépasse la valeur limite.

4. Procédé selon les revendications 1 ou 2,
**caractérisé en ce qu'**
on calcule au préalable après combien d'adresses de lecture, l'erreur dépasse la valeur limite, on enregistre le nombre ainsi obtenu d'adresses de lecture et on compense l'erreur après le traitement de ce nombre d'adresses de lecture.

5. Procédé selon les revendications 3 ou 4,
**caractérisé en ce que**
l'adresse de lecture et la valeur limite se composent chaque fois d'un composantes en x et en y, on décompose l'erreur en composantes en x et en y et on corrige l'adresse de lecture par l'addition ou la soustraction de valeurs de correction aux composantes en x et en y de l'adresse de lecture, dès que les composantes en x ou en y, dépassent la valeur limite.

6. Procédé selon la revendication 5,
**caractérisé en ce que**
les composantes en x et en y de la valeur limite et de la valeur de correction correspondent chaque fois à un pas d'adresse.

7. Procédé selon l'une quelconque des revendications 1 à 5,
**caractérisé en ce que**

a) on utilise une matrice à valeur de seuils ou un modèle de bits qui représente n . m cellules de points de trame,
b) les composantes en x et en y de la valeur limite correspondent chaque fois à une fraction d'un pas d'adresse,
c) on sélectionne les sommets des n . m cellules de points de trames qui ont été décalés d'une fraction d'un pas d'adresse par rapport à l'ensemble des pas d'adresse dans la direction x et/ou la direction y et
d) on utilise les points des sommets des composants d'adresses en nombres entiers, les plus proches comme valeurs de correction.

8. Procédé selon la revendication 7,
**caractérisé en ce que**
parmi les points de sommet choisis, une coordonnée se situe sur un pas d'adresse entier et l'autre coordonnée sur une fraction d'un pas d'adresse.

9. Procédé selon la revendication 8,
**caractérisé en ce qu'**
à partir des sommets choisis, une coordonnée se trouve sur un pas d'adresse entier et l'autre coordonnée est décalée d'une fraction aussi faible que possible d'un pas d'adresse.

## Fig. 1

## Fig. 2

## Fig. 3

<u>Fig. 4, Blatt1</u>

```
10   yaoffset = 0
20   yboffset = 0
30   yaerr    = 0
40   yberr    = 0

60   wiederhole fuer alle Zeilen der Bitmap mit y=1...n
70       xaoffset = yaoffset
80       xboffset = yboffset
90       xaerr  = yaerr
100      xberr  = yberr

110      wiederhole fuer alle Bits einer Zeile mit x=0...m
120          tmp = Schwellwertzugriff (x+xaoffset, y+xboffset)

140          vergleiche tmp mit externem Farbwertsignal
150          und setze Bit x,y der Bitmap in Abhaengigkeit
160          von dem Vergleichsergebnis

180          xaerr = xaerr + dxa
190          xberr = xberr + dxb

200          if (xaerr < -1)
210              xaoffset=xaoffset-1
220              xaerr   = xaerr + 1

230          if (xaerr >  1)
240              xaoffset=xaoffset+1
250              xaerr   = xaerr - 1

260          if (xberr < -1)
270              xboffset=xboffset-1
280              xberr   = xberr + 1

290          if (xberr >  1)
300              xboffset=xboffset+1
310              xberr   = xberr - 1
320      ende wiederholung fuer x

340      yaerr = yaerr + dya
350      yberr = yberr + dyb
```

Fig. 4, Blatt 2

```
370          if (yaerr < -1)
380              yaoffset=yaoffset-1
390              yaerr  = yaerr + 1

400          if (yaerr >  1)
410              yaoffset=yaoffset+1
420              yaerr  = yaerr - 1

430          if (yberr < -1)
440              yboffset=yboffset-1
450              yberr  = yberr + 1

460          if (yberr >  1)
470              yboffset=yboffset+1
480              yberr  = yberr - 1
490          ende wiederholung y
```

Fig. 5, Blatt 1

```
 1 danox  = 4       (rp7)
 2 danoy  = 19      (rp7)
 3 dbnox  = 6       (rp4)
 4 dbnoy  = 11      (rp4)
 5 dapox  = 14      (rp5)
 6 dapoy  = 13      (rp5)
 7 dbpox  = 12      (rp8)
 8 dbpoy  = 21      (rp8)

 9 maxerr = 0.333333

10 yaoffset = 0
20 yboffset = 0
30 yaerr   = 0
40 yberr   = 0

60 wiederhole fuer alle Zeilen der Bitmap mit y=1...n
70      xaoffset = yaoffset
80      xboffset = yboffset
90      xaerr  = yaerr
100     xberr  = yberr

110     wiederhole fuer alle Bits einer Zeile mit x=0...m
120         tmp = Schwellwertzugriff (x+xaoffset, y+xboffset)

140         vergleiche tmp mit externem Farbwertsignal
150         und setze Bit x,y der Bitmap in Abhaengigkeit
160         von dem Vergleichsergebnis

180         xaerr = xaerr + dxa
190         xberr = xberr + dxb

200         if (xaerr < -maxerr)
210             xaoffset=xaoffset+danox
215             xboffset=xboffset+danoy
220             xaerr   = xaerr + maxerr
230         if (xaerr >  maxerr)
240             xaoffset=xaoffset+dapox
245             xboffset=xboffset+dapoy
250             xaerr   = xaerr - maxerr
260         if (xberr < -maxerr)
265             xaoffset=xaoffset+dbnox
270             xboffset=xboffset+dbnoy
280             xberr   = xberr + maxerr
```

Fig. 5, Blatt 2

```
if (xberr >  maxerr)
    xaoffset=xaoffset+dbpox
    xboffset=xboffset+dbpoy
    xberr   = xberr - maxerr
ende wiederholung fuer x

yaerr = yaerr + dya
yberr = yberr + dyb

if (yaerr < -maxerr)
    yaoffset=yaoffset+danox
    yboffset=yboffset+danoy
    yaerr   = yaerr + maxerr
if (yaerr >  maxerr)
    yaoffset=yaoffset+dapox
    yboffset=yboffset+dapoy
    yaerr   = yaerr - maxerr
if (yberr < -maxerr)
    yaoffset=yaoffset+dbnox
    yboffset=yboffset+dbnoy
    yberr   = yberr + maxerr
if (yberr >  maxerr)
    yaoffset=yaoffset+dbpox
    yboffset=yboffset+dbpoy
    yberr   = yberr - maxerr
ende wiederholung y
```

Fig. 6, Blatt 1

```
1   danox  = 4        (rp7)
2   danoy  = 19       (rp7)
3   dbnox  = 6        (rp4)
4   dbnoy  = 11       (rp4)
5   dapox  = 14       (rp5)
6   dapoy  = 13       (rp5)
7   dbpox  = 12       (rp8)
8   dbpoy  = 21       (rp8)

9   maxerr = 0.333333

10  yaoffset = 0
20  yboffset = 0
30  yaerr    = 0
40  yberr    = 0

50  Erzeuge alle Bitmuster des Schwellwertgebirges fuer alle
55  benutzten Farbwerte

60  wiederhole fuer alle Zeilen der Bitmap mit y=1...n
70      xaoffset = yaoffset
80      xboffset = yboffset
90      xaerr    = yaerr
100     xberr    = yberr

110     Bestimme ab x=0 bis maximal x=m die Anzahl der Bits mit konstantem
111     Farbwert, die am Stück ohne Fehlerkorrektur von den Bitmustern
112     kopiert werden kann, ohne dass eine Fehlerkorrektur erforderlich ist
113     und speichere diesen Wert in konstbits
120         tmp = Bitmusterzugriff (Farbwert, x+xaoffset, y+xboffset, konstbits)

140         speichere alle konstbits, die in tmp zwischengespeichert sind
150         ab der Adresse x,y in der Bitmap
160

180         xaerr = xaerr + dxa*konstbits
190         xberr = xberr + dxb*konstbits
```

## Fig. 6, Blatt 2

```
200        if (xaerr < -maxerr)
210            xaoffset=xaoffset+danox
215            xboffset=xboffset+danoy
220            xaerr   = xaerr + maxerr
230        if (xaerr > maxerr)
240            xaoffset=xaoffset+dapox
245            xboffset=xboffset+dapoy
250            xaerr   = xaerr - maxerr
260        if (xberr < -maxerr)
265            xaoffset=xaoffset+dbnox
270            xboffset=xboffset+dbnoy
280            xberr   = xberr + maxerr
290        if (xberr > maxerr)
295            xaoffset=xaoffset+dbpox
300            xboffset=xboffset+dbpoy
310            xberr   = xberr - maxerr

315        x = x + konstbits
320        ende wiederholung fuer x

340        yaerr = yaerr + dya
350        yberr = yberr + dyb

370        if (yaerr < -maxerr)
380            yaoffset=yaoffset+danox
385            yboffset=yboffset+danoy
390            yaerr   = yaerr + maxerr
400        if (yaerr > maxerr)
410            yaoffset=yaoffset+dapox
415            yboffset=yboffset+dapoy
420            yaerr   = yaerr - maxerr
430        if (yberr < -maxerr)
435            yaoffset=yaoffset+dbnox
440            yboffset=yboffset+dbnoy
450            yberr   = yberr + maxerr
460        if (yberr > maxerr)
465            yaoffset=yaoffset+dbpox
470            yboffset=yboffset+dbpoy
480            yberr   = yberr - maxerr
490 ende wiederholung y
```